Europäisches Patentamt

European Patent Office

Office européen des brevets

(11) Publication number: **0 434 260 A1**

# EUROPEAN PATENT APPLICATION

(21) Application number: 90313219.9

(51) Int. Cl.⁵: **F16D 3/84**, B60K 17/22

(22) Date of filing: 05.12.90

(30) Priority: 07.12.89 GB 8927676

(43) Date of publication of application:
26.06.91 Bulletin 91/26

(84) Designated Contracting States:
DE ES FR GB

(71) Applicant: DRAFTEX INDUSTRIES LIMITED
3 Glenfinlas Street
Edinburgh, EH3 6YY, Scotland(GB)

(72) Inventor: Lallement, Serge
2 Les Hauts de l'Erdre
F-44240 La Chapelle-sur-Erdre(FR)

(74) Representative: Foster, David Martyn et al
MATHISEN MACARA & CO. The Coach
House 6-8 Swakeleys Road
Ickenham Uxbridge UB10 8BZ(GB)

(54) Protecting bellows device for rotary shaft.

(57) The transmission shaft 5 of a front wheel driven vehicle extending from the transmission unit to the driven wheel via universal joints 10 and 12 respectively is protected by a bellows arrangement 14 in one piece, comprising an intermediate part 14A and end parts 14B and 14C. Such an arrangement is less expensive to manufacture and fit than two separate bellows each merely protecting one of the universal joints and the associated end region of the shaft. The bellows arrangement 14 can be used to facilitate initial lubrication of the universal joints after fitting of the bellows. The bellows arrangement 14 can be made in two parts which are secured together without axial gap. If the drive shaft carries a vibration damper, this can be used as the means of joining the two parts of the bellows arrangement together.

Fig.1.

EP 0 434 260 A1

## PROTECTING BELLOWS DEVICE FOR ROTARY SHAFT

The invention relates to a protecting device for a rotary shaft requiring protection in the region of each of its ends, comprising a bellows arrangement which extends from one shaft end region to the other shaft end region without any axial gap.

Such an arrangement is shown in GB-PS-I 596 837. However, in this device, the bellows arrangement is secured in an axial position by an interior ring. A problem with this device is that the interior ring can prevent a through connection between the end regions of the bellows arrangement. The invention aims to overcome this problem.

Accordingly, the device as first set forth above is characterised in that the bellows arrangement includes within its interior a through passage parallel to the shaft between the two end regions.

The invention also relates to a protecting bellows device for a rotary shaft requiring protection in the region of each of its ends, at least one of which incorporates a universal joint, comprising a bellows arrangement which extends from one shaft end region to the other shaft end region without any axial gap.

Such a device is also shown in GB-PS-I 596 837. However, in this device the universal joint is of the ball and socket type. Accordingly, the device is characterised in accordance with the invention in that the bellows arrangement is made of thermoplastics material, and in that the universal joint is of the tripod type.

A protective bellows device or arrangement embodying the invention and for use on the transmission shaft extending in a front wheel drive motor vehicle from the transmission assembly to one of the driven front wheels of the vehicle will now be described, by way of example only, with reference to the accompanying diagrammatic drawings in which:

Figure 1 shows one form of the bellows in cross-section and fitted on a front wheel drive transmission shaft;

Figure 2 shows an external view of the bellows of Figure 1;

Figure 3 shows a modified form of the bellows of Figure 2;

Figure 4 shows a further modified form of the bellows of Figure 2;

Figure 5 shows yet a further modified form of the bellows of Figure 2;

Figure 6 shows the bellows of Figure 1 modified for receiving lubricating oil or grease;

Figure 7 shows a modified form of the arrangement shown in Figure 6;

Figure 8 is a diagrammatic cross-section on the line VIII-VIII of Figure 7;

Figure 9 is a side elevation, partly in section, showing how the entry holes for the lubricating grease in the arrangements of Figure 6 and 7 can be sealed;

Figure 10 is a view corresponding to Figure 2 but showing the bellows constructed in two parts joined together;

Figure 11 is an enlarged partial cross-section of the arrangement shown in Figure 10;

Figure 12 shows a modified form of the bellows of Figure 1 in cross-section and incorporating a vibration damper;

Figure 13 shows a modified form of the arrangement of Figure 12; and

Figure 14 shows a modified form of the arrangement of Figure 13.

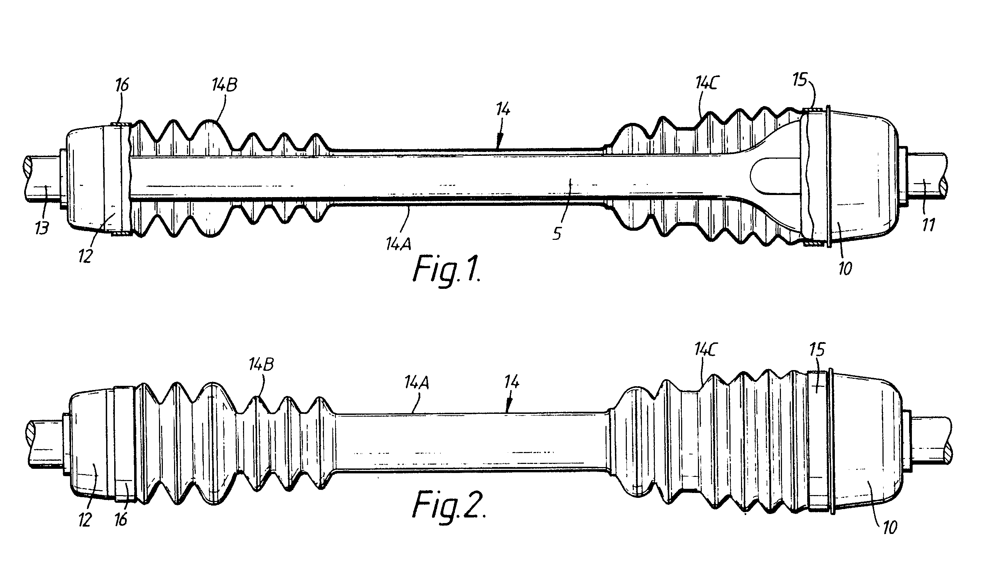

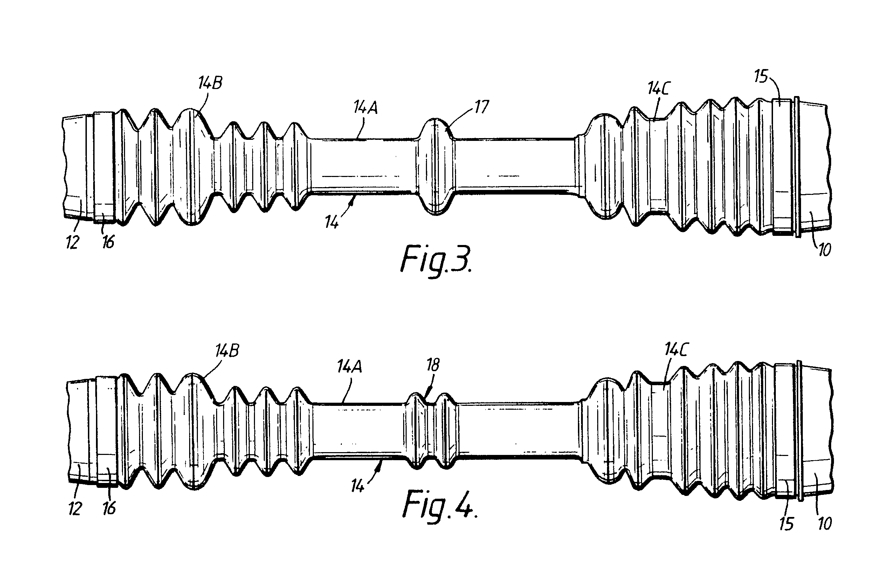

Figure 1 shows the drive shaft 5 extending between the transmission unit (not shown) of a front wheel driven vehicle and the corresponding driven wheel (also now shown) of the vehicle. The drive shaft 5 is connected to the transmission unit via a universal joint 10 of the tripod type and a shaft 11 and is connected to the driven wheel by another universal joint 12 also of the tripod type and a shaft 13.

In order to protect the shaft 5 and the universal joints 10 and 12, a protective bellows arrangement 14 extends completely along the drive shaft 5, between the outer casings of the universal joints 10 and 12, thus completely protecting the drive shaft 5 and the universal joints 10 and 12 from dirt and moisture and other contamination. The bellows is connected to the outer casings of the universal joints by collars indicated diagrammatically at 15 and 16.

The bellows arrangement is preferably made of thermoplastic material by blow extrusion or blow injection. It comprises an intermediate part 14A and two end parts 14B and 14C.

The bellows arrangement 14 shown is thus distinguished over other bellows arrangements in which two separate bellows are used, one protecting the universal joint 10 and the neighbouring region of the shaft 5 and the other protecting the universal joint and the neighbouring region of the shaft 5. The use of two such bellows is disadvantageous because each one has to be separately sealed to the shaft 5 at its end remote from the respective universal joint. The need for such sealing complicates the design of the bellows and its manufacture, and increases its cost and also the assembly time. Furthermore, there is a risk that the sealing will be less than perfect and that the universal joints will become contaminated. The arrangement illustrated in Figure 1, in which a single one-piece bellows arrangement covers both universal joints and the shaft between them is less expensive to manufacture and assemble onto the shaft and is more effective in operation.

Figure 2 is an external view of the bellows arrangement 14 of Figure 1.

The intermediate part 14A of the bellows arrangement allows axial and radial relative movement between the end parts 14B and 14C.

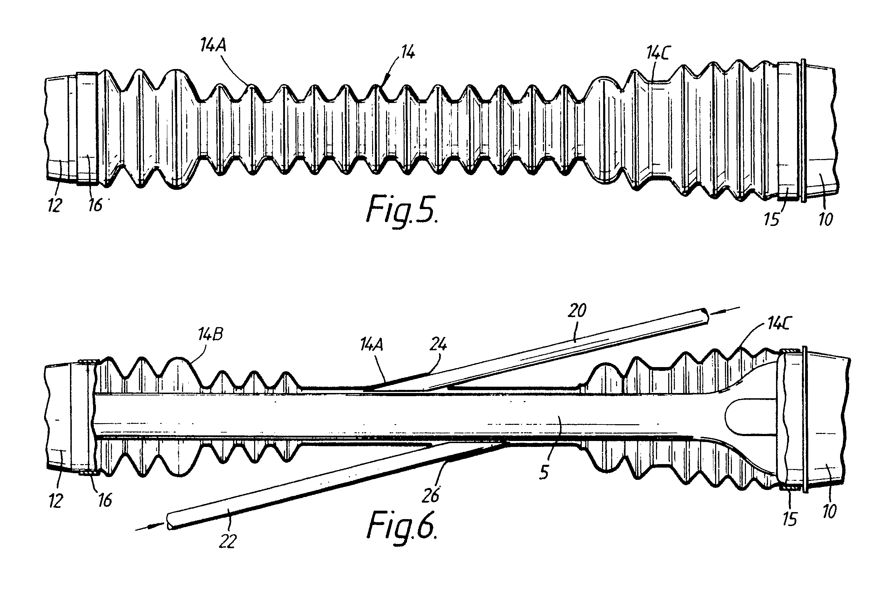

Figure 3 shows a modification where the intermediate part 14A of the bellows arrangement 14 is provided with a bellows turn 17 for increased flexibility, and Figure 4 shows an arrangement in which even greater flexibility is provided by double bellows turn 18. Figure 5 shows a further modification in which the whole of the intermediate part 14A of the bellows arrangement is arranged in bellows formation to provide still greater flexibility.

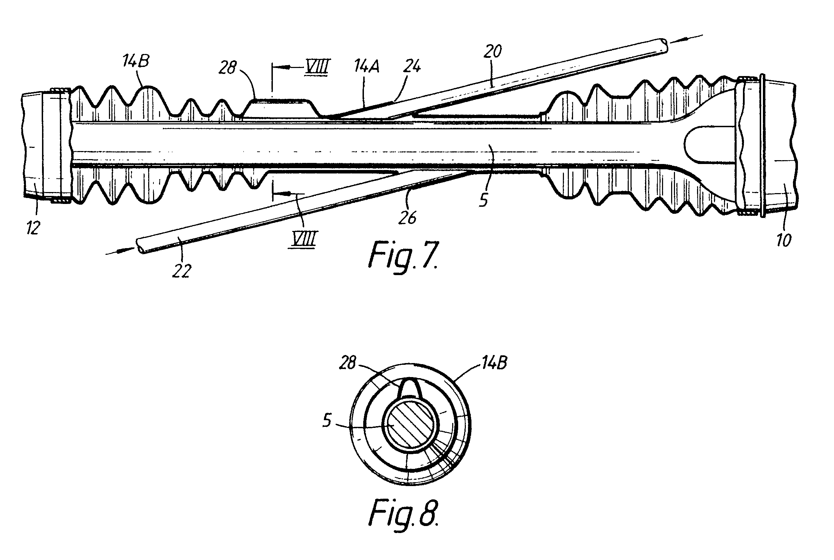

It is important to provide proper lubrication for the universal joints 10 and 12 after assembly of the bellows arrangement onto the shaft. The one-piece nature of the bellows arrangement 14 facilitates this as shown in Figure 6. Here, nozzles 20 and 22 are forced through holes 24 and 26 provided in the intermediate part 14A of the bellows arrangement and, by means of these nozzles, lubricating grease is injected towards the two universal joints 10 and 12 respectively, the feeding of the grease to the universal joints being facilitated by the continuous nature of the bellows arrangement and the absence of any seals between the bellows arrangement and the shaft 5.

Figure 7 shows a modification of the arrangement shown in Figure 6. As shown in the sectional view of Figure 8, the bellows part 14B is modified to provide a duct 28 to provide a better transfer of the grease towards the universal joint 12. Clearly, a similar duct can be provided in the bellows part 14C to facilitate transfer of the grease to the universal joint 10.

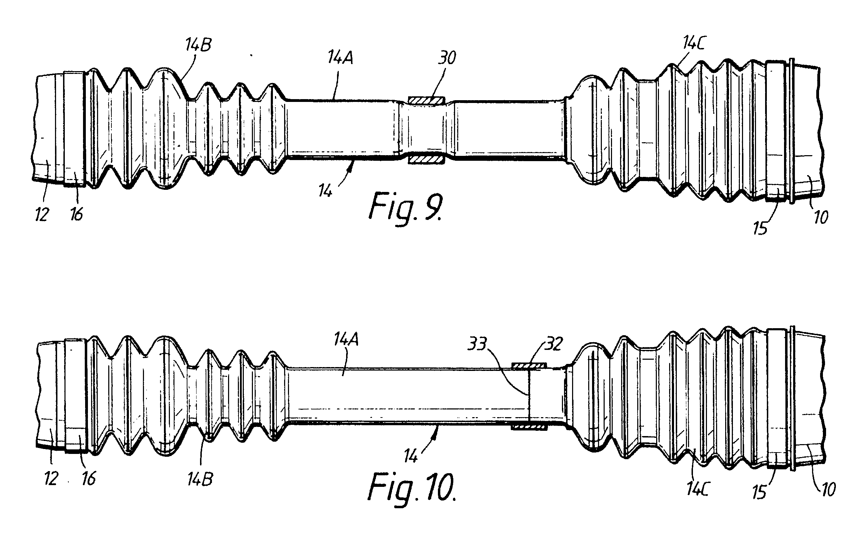

Figure 9 shows how the holes 24 and 26 can be sealed by a collar 30 after injection of the grease.

The continuous construction of the bellows arrangement 14 ensures that the grease fed to the universal joints 10 and 12 also in fact covers substantially the whole of the outside of the surface of the shaft 5 and protects the latter against corrosion.

Figure 10 shows how the continuous bellows arrangement 14 can in fact be made in two separate parts which are joined together by a collar 32 at a join 33 after assembly onto the drive shaft. The arrangement illustrated cannot be equated to the two separate seals used in the prior arrangement discussed above; the collar 32 in Figure 10 does not seal against the shaft but joins the two parts of the continuous bellows arrangement 14.

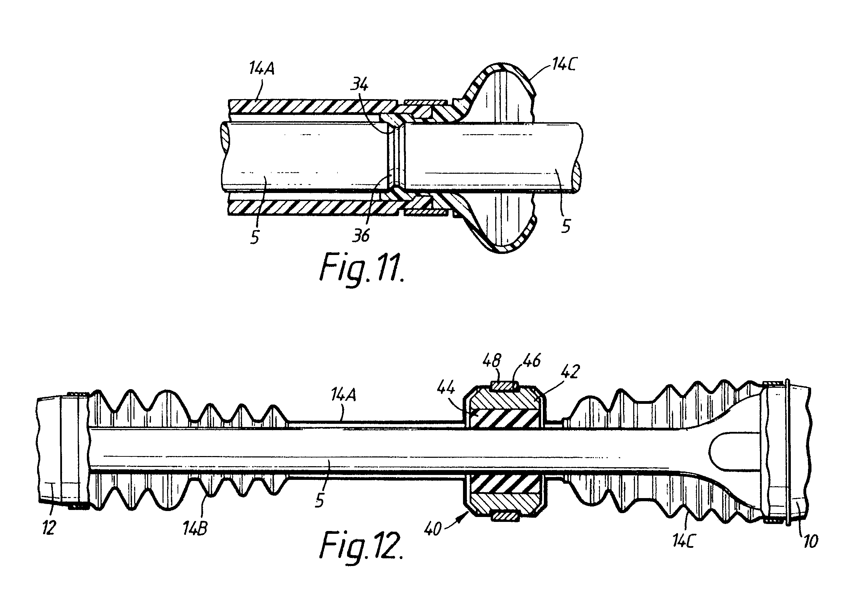

Figure 11 shows a modified arrangement in which the two separated parts of the bellows arrangement of Figure 10 are interlocked together by being concentrically overlapped, the bellows part 14C extending inside the end of the tubular part 14A and having a shoulder 34 which locks in a recess 36 in the circumference of the shaft 5.

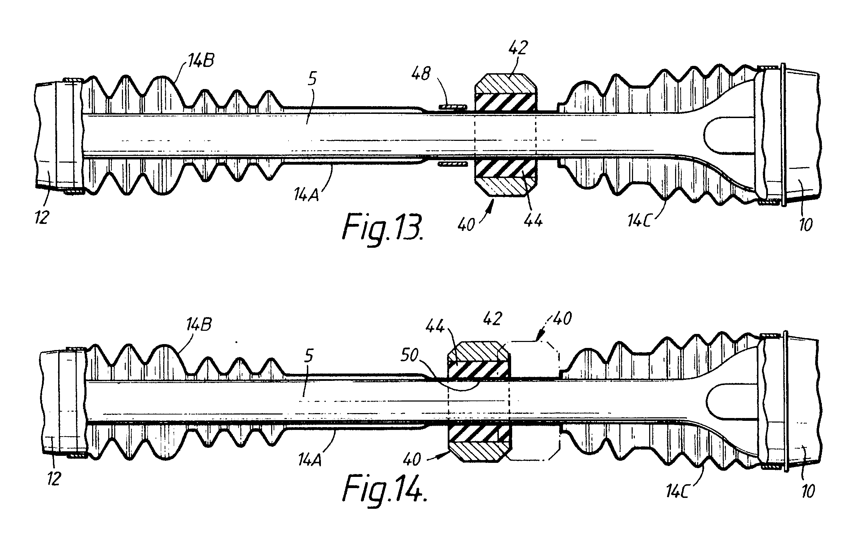

It is known to provide a drive shaft with a vibration damper comprising, for example, a ring of metal (such as lead). Such a damper is shown at 40 in Figure 12, the lead being in the form of a ring 42 surrounding a collar 44 of resilient material. Figure 12 shows how such a damper 40 can additionally serve as a point of connection between two parts of the bellows arrangement, the bellows part 14C extending around the outside of the damper ring 42 and being located in a peripheral recess 46 therein in which is also located the end of a suitably shaped extension of the tubular part 14A, the two bellows parts being connected together within the recess 46 by a connecting collar 48.

Figure 13 shows a modification in which the damper 40 is positioned externally of the bellows arrangement 14, being in fact positioned externally around the tubular part 14A of the bellows. The arrangement shown in Figure 13 may additionally be one in which the bellows is made in two parts which are joined together by a collar 48.

Figure 14 shows a modified arrangement in which the damper 40 is itself used as a means of connecting together the two bellows parts. The two bellows parts are assumed to abut each other, or possibly overlap each other, at the region 50. Initially, the bellows part 14C is fitted in position and the damper 40 slid over it into the position shown dotted. After the remaining part of the bellows arrangement has been fitted in position (that is, the bellows part 14B and the intermediate part 14A), so as to butt up to, or possibly slightly overlap, the end of the bellows part 14C, the damper 40 is slid into the full-line position and secures the two bellows parts together.

The arrangements shown in Figures 13 and 14 imply that the lubricating grease is forced into the universal joints before the bellows arrangements are fitted in position.

## Claims

1. A protecting bellows device for a rotary shaft (5) requiring protection in the region of each of its ends, comprising a bellows arrangement (14) which extends from one shaft end region to the other shaft end region without any axial gap, characterised in that the bellows arrangement (14) includes within its interior a through passage parallel to the shaft (5) between the two end regions.

2. A protecting device for a rotary shaft (5) requiring protection in the region of each of its ends, at least one of which incorporates a universal joint (10), comprising a bellows arrangement (14) which extends from one shaft end region to the other shaft end region without any axial gap, characterised in that the bellows arrangement (14) is made of thermoplastics material, and in that the universal joint (10,12) is of the tripod type.

3. A device according to claim 1 or 2, characterised in that the bellows arrangement (14) is in one piece.

4. A device according to claim 1 or 2, characterised in that the bellows arrangement (14) is in two longitudinally extending axially arranged parts (e.g. 14A and 14B; and 14C) joined together with no gap between them.

5. A device according to claim 4, characterised in that the two longitudinally extending parts (14A,14B; and 14C) are joined together by an external collar (32).

6. A device according to claim 4, characterised in that the two longitudinally extending parts (14A,14B; and 14C) overlap each other along the length of the shaft (5).

7. A device according to claim 6, characterised in that the innermost one of the overlapping parts is located in a groove (36) in the shaft (5).

8. A device according to any preceding claim, characterised by a respective bellows part (14B,14C) covering each end region and an intermediate part (14A) connecting the two bellows parts (14B,14C), the three parts (14A,14B,14C) having no axial gaps between them.

9. An arrangement according to claim 8, characterised in that the intermediate part (14A) incorporates one or more bellows turns (17,18).

10. An arrangement according to any preceding claim, characterised by a feeding device (20,22,24,26) permitting injection of lubricant inside the bellows arrangement (14) for feeding to one or both of the end regions.

11. An arrangement according to claim 8 or 9 and to claim 10, characterised in that the feeding device for the lubricant comprises at least one aperture (24,26) in the intermediate part (14A).

12. An arrangement according to claim 11, characterised by a device means for subsequently sealing the aperture (24,26).

13. An arrangement according to any one of claims 10 to 12, characterised by means defining one or more ducts (28) in the intermediate part (14A) for facilitating the feeding of lubricant to one or both of the end regions.

14. An arrangement according to any preceding claim, characterised by a vibration damper (40) secured to the rotary shaft (5).

15. An arrangement according to claim 14, characterised in that the bellows arrangement (Fig. 13) passes between the damper (40) and the outside of the shaft (5).

16. An arrangement according to any one of claims 4 to 7, characterised in that it is combined with a vibration damper (40) mounted on the shaft (5), the damper (40) providing means for joining together the two longitudinally extending parts (14A,14B; and 14C).

17. An arrangement according to claim 16, characterised in that the damper (40) is in the form of a collar (48, Figure 12) secured around the shaft at an axially intermediate position therealong and in which the two said longitudinally extending parts are joined together around the outside of the damper.

18. An arrangement according to claim 16, characterised in that the damper (40) is in the form of a collar (Figure 14) secured around the outside of the shaft (5) and which also extends around the outside of the adjacent ends of the two said longitudinally extending parts (14A,14B; and 14C) and joins them together.

Fig.1.

Fig.2.

Fig.3.

Fig.4.

EP 0 434 260 A1

Fig.5.

Fig.6.

EP 0 434 260 A1

Fig.7.

Fig.8.

EP 0 434 260 A1

Fig. 9.

Fig. 10.

Fig. 11.

Fig. 12.

Fig.13.

Fig.14.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 102 915  (UNI-CARDAN)<br>* Whole document *<br>— — — | 1,8 | F 16<br>D 3/84<br>B 60 K 17/22 |
| A | | 4,5,6,7 | |
| X | FR-A-2 550 139  (GLAENZER SPICER)<br>* Page 5; figures 2,4 *<br>— — — | 1,3 | |
| A | | 2,9 | |
| A | DE-U-8 715 744  (SALVO)<br>* Whole document *<br>— — — | 1,3,4,8 | |
| A | FR-A-2 550 293  (GLAENZER SPICER)<br>* Figure 7 *<br>— — — | 1,2,3 | |
| A | US-A-4 223 565  (SUGIYAMA)<br>* Whole document *<br>— — — | 14 | |
| A | US-A-2 702 996  (DAVIS)<br>— — — — — | | |
| | | | **TECHNICAL FIELDS SEARCHED (Int. Cl.5)**<br><br>F 16 D<br>F 16 J<br>B 60 K |

The present search report has been drawn up for all claims

| Place of search | Date of completion of search | Examiner |
|---|---|---|
| The Hague | 01 March 91 | ORTHLIEB CH.E. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document